# EUROPÄISCHE PATENTANMELDUNG

(11) **EP 4 844 697 A1**
(43) Veröffentlichungstag der Anmeldung: **25.11.2026**
(21) Anmeldenummer: 25178137.3
(22) Anmeldetag: 22.05.2025
(51) Int. Cl.: G06V 10/764, G06V 10/82, G06V 10/70, G06V 10/94, G06V 20/00

(54) **VERFAHREN UND SYSTEM ZUM ERKENNEN EINES OBJEKTS IN EINEM BILD**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Verfahren zum Erkennen eines Objekts in einem Bild, welches durch ein Klienten-Server-System mit einem Server (S) und verbundenen Klienten (C1-C3) ausgeführt wird, wobei folgende Schritte ausgeführt werden:
a) Bereitstellen eines trainierten Grund-Modells (VFM),
b) Bereitstellen einer Menge von Adaptern (Ax) für das Grund-Modell (VFM), wobei die Adapter der Menge an Adaptern (Ax) jeweils dazu eingerichtet sind, das Grund-Modell (VFM) für eine spezifische Anwendung anzupassen,
c) Anpassen des Grund-Modells (VFM) durch einen Adapter, welcher durch eine bereitgestellte Anwendungsdeklaration für den jeweiligen Klienten (C1-C3) aus der Menge an Adaptern (Ax) ausgewählt ist,
d) Erzeugen eines jeweiligen anwendungsspezifischen Modells (SVM1-SVM3) auf Basis des zuvor angepassten Grund-Modells (VFM) durch Wissensdestillation,
e) Übermitteln des jeweiligen anwendungsspezifischen Modells (SVM1-SVM3) als jeweiliges lokales Modell (LM1-LM3) an den jeweiligen Klienten (C1-C3),
f) Bereitstellen eines Bildes mit dem Objekt an einen, unter den Klienten (C1-C3) ausgewählten Klienten,
g) Erkennen des Objekts im Bild mithilfe des jeweiligen lokalen Modells (LM1-LM3) am ausgewählten Klienten.

## Beschreibung

Die Erfindung betrifft ein computer-implementiertes Verfahren zum Erkennen eines Objekts in einem Bild, welches durch ein Klienten-Server-System mit einem Server und verbundenen Klienten ausgeführt wird.

Die Erfindung betrifft ferner ein Computer-Programm-Produkt.

In der industriellen Objekterkennung in Bildern werden häufig Modelle künstlicher Intelligenz, kurz Kl, angewendet.

Das Erzeugen und Trainieren von Kl-Modellen können jedoch sehr aufwändig sein, weshalb es versucht wird, bestehende KI-Modelle entsprechend anzupassen.

Die Herausforderung besteht dabei darin, beispielsweise Basis-Modelle oder Grund-Modelle (engl. "Foundation Model", kurz FM) für die Bildverarbeitung, sogenannte "Vision Foundation Models", kurz VFM, effizient zu nutzen, um aufgabenspezifisch angepasste, kleinere "Small Vision Models", kurz SVM, zu erstellen, die auf Edge-Geräten ohne umfangreiche Umschulung eine gute Leistung erbringen können.

Diese "kleinen" Kl-Modelle sind zumindest um eine Zehnerpotent kleiner, bevorzugt um zwei oder drei oder gar sechs Zehnerpotenzen kleiner in der Anzahl der umfassten Neuronen als ein "großes" Kl-Modell.

Die Entwicklung eines FMs beziehungsweise VFMs für die visuelle Qualitätsprüfung in der Industrie bietet mehrere Schlüsselfunktionen, die die betriebliche Effizienz und die Qualitätskontrollprozesse erheblich verbessern.

Im Stand der Technik ist es üblich große KI-Modelle, also Modelle mit mehreren Milliarden Knoten, manuell für bestimmte Aufgaben anzupassen, beispielsweise durch Anwendung entsprechender Eingabeaufforderungen an das Kl-Modell, insbesondere wenn es um unterschiedliche Branchenanforderungen geht.

Dieser Prozess kann einen erheblichen manuellen Aufwand erfordern und zudem ressourcenintensiv sein, da er das Sammeln und Beschriften großer Datensätze, das Neutrainieren von Modellen und die manuelle Optimierung für die begrenzte Rechenleistung von Edge-Geräten umfasst.

Die Feinabstimmung von VFMs für bestimmte Aufgaben erfordert in der Regel ein umfangreiches erneutes Trainieren mit spezifischen Trainingsdaten oder Adaptern, wobei eine solche manuelle Anpassung an unterschiedliche Branchen meist ressourcen- und zeitintensiv ist.

Die Herausforderung besteht auch darin, den Prozess zu automatisieren und zu rationalisieren, um aufgabenspezifische SVMs für den Edge-Einsatz effizient zu erstellen.

Die Bereitstellung von VFMs auf Edge-Geräten ist im Stand der Technik aufgrund der großen Größe und der Rechenanforderungen dieser Modelle eine Herausforderung.

Um dieses Problem zu lösen, werden im Stand der Technik oft auf kleinere, aufgabenspezifische Modelle verwendet, welche entweder von Grund auf neu trainiert oder aus vortrainierten, kleinen Modellen fein abgestimmt werden.

Diese Modelle sind für die Leistung bei bestimmten Aufgaben optimiert, es fehlt jedoch die Generalisierung und Robustheit größerer VFMs.

Ein weiterer Ansatz besteht darin, große Modelle durch Techniken wie Bereinigung oder Quantisierung zu komprimieren, um ein kleineres, anwendungsspezifisches Modell zu generieren, welches das Verhalten eines größeren Grund-Modells nachahmt.

Diese Methoden erfordern jedoch oft einen erheblichen manuellen Aufwand, um Modelle für bestimmte Edge-Anwendungen anzupassen, und sie nutzten die umfassenden Funktionen von VFMs nicht voll aus.

Ziel der Erfindung ist es daher, eine Methode zu entwickeln, die diesen Anpassungsprozess automatisiert und rationalisiert und eine schnelle und effiziente Feinabstimmung von VFMs in SVMs ermöglicht, die sowohl leicht als auch hochgenau für bestimmte industrielle Anwendungen sind.

Mit anderen Worten soll erreicht werden, dass aus allgemein verfügbaren Datensätzen, wie große Sprachmodelle oder Grund-Modelle, anwendungsspezifische Modelle erzeugt werden können, welche auch auf Geräten mit eingeschränkten Rechen- und Speicherressourcen betrieben werden können, um beispielsweise Bildanalyseaufgaben, Gerätesteuerungen oder Überwachungen des Betriebs von technischen Geräten effizient auszuführen.

Die erfindungsgemäße Aufgabe wird durch ein computer-implementiertes Verfahren zum Erkennen eines Objekts in einem Bild, welches durch ein Klienten-Server-System mit einem Server und verbundenen Klienten ausgeführt wird, wobei folgende Schritte ausgeführt werden:
a) Bereitstellen eines trainierten Grund-Modells auf Basis künstlicher Intelligenz, welches ein Convolutional Neural Network, CNN, mit Lagen umfasst, und dadurch einen Bild-Encoder bildet, an den Server,
b) Bereitstellen einer Menge von Adaptern für das Grund-Modell, in einem Speicher, wobei die Adapter der Menge an Adaptern jeweils dazu eingerichtet sind, das Grund-Modell für eine spezifische Anwendung anzupassen, an den Server,
c) Anpassen des Grund-Modells durch einen Adapter, welcher durch eine bereitgestellte Anwendungsdeklaration für den jeweiligen Klienten aus der Menge an Adaptern ausgewählt ist, durch den Server,
d) Erzeugen eines jeweiligen anwendungsspezifischen Modells, für den jeweiligen Klienten, auf Basis des zuvor angepassten Grund-Modells durch Wissensdestillation, durch den Server,
e) Übermitteln des jeweiligen anwendungsspezifischen Modells als jeweiliges lokales Modell an den jeweiligen Klienten,
f) Bereitstellen eines Bildes mit dem Objekt an einen, unter den Klienten ausgewählten Klienten,
g) Erkennen des Objekts im Bild mithilfe des jeweiligen lokalen Modells am ausgewählten Klienten.

Durch die Verwendung modularer Architekturen und Adapter zur Feinabstimmung von VFMs kann eine Automatisierung des Prozesses zur Erzeugung eines geeigneten Modells erreicht werden, welche für Edge-Anwendungen effizient integriert werden können.

Der Ansatz sieht eine Feinabstimmung von VFMs vor, um Edge-Anwendungen von SVM durch Wissensdestillation zu optimieren.

Dabei wird ein proprietärer Datensatz (engl. "data lake") genutzt, um die Feinabstimmung von VFMs und das Vortraining von SVMs zu verbessern.

Die Verwendung von Kl-Adaptern und dem proprietärem Datensatz sieht vor, ein Repository modularer Adaptermodule und einen großen proprietären Bild-Datensatz zu nutzen, um VFMs effizient für bestimmte Aufgaben zu optimieren.

Diese Integration ermöglicht eine schnelle Anpassung von VFMs an verschiedene Anwendungen unter Verwendung bereits vorhandener Daten und aufgabenspezifischer Adapter.

Ferner ist ein Edge-basiertes Feinabstimmungs-Feedback vorgesehen, wobei zusätzliche Feinabstimmungsmöglichkeiten direkt auf den Edge-Geräten angewandt werden, und neue Daten oder Verfeinerungen, welche an den SVMs an der Edge vorgenommen werden, zurückgeführt werden, um einen VFM-Decoder-Adapter zu verbessern und die Leistung und Anpassungsfähigkeit des Modells kontinuierlich zu verbessern.

Mit anderen Worten sieht die Erfindung einen Ansatz zur Feinabstimmung von VFMs vor, um eine entsprechende Software-Verteilung (engl. "edge-deployments") von SVMs durch Wissensdestillation zu optimieren.

Das zugrunde liegende Vision Foundation-Modell, auch bezeichnet als "M_VFM", verwendet eine Hybridarchitektur, die einen Transformer-basierten Encoder mit CNN-Schichten oder Lagen (engl. "Convolutional Neural Network") kombiniert.

Dieser Ansatz nutzt die Stärken beider Modelle, denn CNNs zeichnen sich durch die Extraktion lokaler Merkmale ("f_C(x)") wie Texturen und Kanten aus, während Transformer effektiv darin sind, globale Abhängigkeiten ("f_T(f_C(x))) zu erfassen, die für das Verständnis des breiteren Kontexts innerhalb eines Bildes entscheidend sind.

Formal verarbeitet der Encoder ('E_VFM') des Vision Foundation Modells ein Eingabebild ('x') wie folgt: $E_VFM \left(x\right) = T \left(C\left(x\right)\right)$

Dabei steht "C(x)" für die CNN-Schichten und "T(C(x))" für die Transformer-Schichten, die auf den Ausgang des CNN angewendet werden.

Der Ausgang des Encoders ('E_VFM(x)') wird an einen Maskendecoder ('D_VFM') übergeben, der eine Segmentierungsmaske ('m(x)') erzeugt.

Diese Maske kann je nach spezifischer industrieller Anwendung auf Aufgaben wie Objekterkennung oder Anomalie-Erkennung spezialisiert werden: $m \left(x\right) = D_VFM \left(E_VFM\left(x\right)\right)$

Diese Architektur ermöglicht es dem Modell "M_VFM" Bilder für eine Vielzahl von Aufgaben effizient zu verarbeiten, indem sie die lokalen Merkmalsextraktionsfunktionen von CNNs mit der kontextsensitiven Verarbeitungsleistung von Transformers kombiniert.

Es wird ein Adapter-Speicher (engl. "repository") genutzt, welcher Adapter enthält, die eine anwendungsspezifische Anpassung oder Feineinstellung des VFM erlauben, beispielsweise eine Optimierung für eine Anomalie-Erkennung, eine Erkennung von Produktdetails in einem Bild, eine Erkennung von Betriebszuständen eines abgebildeten technischen Geräts in einem Bild, oder Ähnliches.

Um das VFM ("M_VFM") an eine Vielzahl von branchenspezifischen Aufgaben anpassbar zu machen, wird der Speicher, also das Repository, mit leichtgewichtigen Adaptermodulen mit der Bezeichnung "A = {A_1, A_2, ..., A_n}" gepflegt.

Jeder Adapter ('A_i') im Repository ist so konzipiert, dass er 'M_VFM' für eine bestimmte Aufgabe fein abstimmt.

Wenn eine neue Aufgabe ('T') eingeführt wird, die durch eine Reihe von Beispielbildern dargestellt wird ('I_T = {x_1, x_2, ..., x_k}'), sucht das System nach einem Adapter ('A_i'), der auf die Aufgabe angewendet werden kann.

Die Suche basiert auf dem Vergleich der Beispielbilder mit den Bildern, die den einzelnen Adaptern zugeordnet sind: $A_match = argmax_ \left\{A_i in A\right\} similarity \left(A_i, l_T\right)$

Wird ein passender Adapter ('A_match') gefunden, wird dieser in das VFM geladen, was eine schnelle Anpassung an die neue Aufgabenstellung ohne aufwändiges erneutes Training ermöglicht.

Wenn kein passender Adapter verfügbar ist, wird ein neuer Adapter ('A_new') erstellt, wie im Folgenden beschrieben, um eine Optimierung oder Anpassung an spezifischen Anwendungen, sogenannte vertikale Bereiche (engl. "verticals") durchzuführen.

Um das VFM ('M_VFM') für bestimmte vertikale Domänen zu verfeinern, wird ein großer Bild-Datensatz (engl. "image datalake", ('D_datalake')), auch als "datalake" bezeichnet, verwendet, der beschriftete und unbeschriftete Bilder aus verschiedenen Industriesektoren enthält.

Für eine bestimmte Aufgabe ("T") innerhalb eines vertikalen Bereichs ("D_v") wird eine relevante Teilmenge von Bildern ("D_task ⊆ D_datalake") ausgewählt.

Ein neuer Encoder-Adapter ('A_new') wird sowohl mit der Teilmenge der Bilder ('D_task') als auch mit den aufgabenspezifischen Beispielbildern ('I_T') trainiert: $E_VFM ′ = fine - tune \left(E_VFM, I_T∪D_task\right)$

Ein neuen Encoder-Adapter wird mit den bereitgestellten Beispielbildern und ähnlichen Bildern aus dem Datalake - beispielsweise in einem Verhältnis von 1:10 oder 1:100 trainiert, wodurch die Notwendigkeit für einen Kunden, Beispielbilder bereitzustellen, stark reduziert wird.

Parallel dazu wird der Decoder ('D_VFM') mit Hilfe von "Parameter-Efficient Fine-Tuning" (PEFT)-Techniken feinabgestimmt, wobei ein entsprechender Decoder-Adapter ('A^D_new') erstellt oder angepasst wird: $D_VFM ′ = PEFT \left(D_VFM, I_T\right)$

Das resultierende fein abgestimmte Modell ('M_VFM' = (E_VFM', D_VFM')') ist nun für den spezifischen vertikalen Bereich optimiert, so dass es domänenspezifische Merkmale erkennen und darauf reagieren kann, wie beispielsweise die Erkennung einzigartiger Produktfehler oder Anomalien in einer Produktionslinie.

Der beschriebene Vorgang kann als das Anpassen des Grund-Modells gemäß einer Anwendungsdeklaration durch einen entsprechenden Anwendungs-Adapter bezeichnet werden.

Das resultierende Modell ist meist sehr groß, weist also eine sehr hohe Anzahl an Neuronen beziehungsweise Knoten auf, und benötigt dementsprechend einen großen Speicher und eine hohe Rechenkapazität, welche durch einen Server bereitgestellt werden kann.

Für eine Ausführung auf einem Klienten, welcher im Vergleich zu einem Server über stark eingeschränkte Speicher- und Rechenkapazitäten verfügt, ist das resultierende Modell deutlich zu groß.

Für die Bereitstellung des VFM auf Edge-Geräten, bei denen die Rechenressourcen begrenzt sind, wird durch Wissensdestillation ein kleineres, effizienteres SVM ("M_SVM") erstellt.

Die Modell-Größe zwischen dem SVM und dem VFM kann beispielsweise in einem Verhältnis von 1 : 1 000, 1 : 1 000 000 oder sogar noch geringer liegen.

Zunächst wird 'M_SVM' auf unüberwachte Weise mit dem Datensatz vortrainiert, das dem Encoder-Adapter zugeordnet ist: $M_SVM_pretrain = pre - train \left(M_SVM, D_task\right)$

Das fein abgestimmte VFM ('M_VFM") fungiert dann als Lehrermodell und leitet den Destillationsprozess, um das endgültige kleine Modell ('M_SVM") zu erzeugen: $M_SVM ′ = distill \left(M_VFM′, M_SVM_pretrain\right)$

Dieses destillierte Modell ist für den Einsatz auf Edge-Geräten optimiert, die häufig in industriellen Umgebungen verwendet werden, wie beispielsweise in Qualitätskontrollstationen oder Roboterarmen, sodass diese Geräte komplexe Aufgaben mit hoher Effizienz ausführen können.

Nach der Destillation wird das aufgabenspezifische SVM ('M_SVM") auf Edge-Geräten, also den Klienten, bereitgestellt.

Diese Geräte, die in industriellen Echtzeitumgebungen betrieben werden, nutzen den Ausgang ("m_SVM(x)") des SVM - Segmentierungsmasken - um Aufgaben wie die Fehlererkennung auszuführen.

Die Masken werden dann mit einem Nachbearbeitungsskript ('P') verarbeitet, das zusätzliche Operationen wie die Fehlerlokalisierung umfassen kann: $y_final = P \left(m_SVM\left(x\right)\right)$

Bei Bedarf kann das SVM am Rand mit neuen Beispielbildern ("I_new") weiter feinabgestimmt werden: $M_SVM " = fine - tune \left(M_SVM′, I_new\right)$

Diese neuen Bilder werden zusammen mit den ursprünglichen Datalake-Bildern gespeichert, um zukünftige Destillationsprozesse zu verbessern und sicherzustellen, dass das SVM auch dann effektiv funktioniert, wenn neue Daten gefunden werden.

Kl-Adapter funktionieren, indem sie der vortrainierten Architektur kleine, trainierbare Schichten hinzufügen, wobei diese Schichten die Parameter des Modells nur geringfügig anpassen, während die Integrität der Funktionen des ursprünglichen Modells erhalten bleibt.

Adapter sind kleine neuronale Netzwerkmodule, die in vortrainierte Basismodelle wie BERT oder GPT-4 eingefügt werden, um sie an neue Aufgaben oder Domänen anzupassen.

Anstatt das gesamte massive VFM neu zu trainieren, werden nur die einfachen Adaptermodule mit den neuen Aufgabendaten trainiert.

Adapter bestehen üblicherweise aus einem kleinen neuronalen Feed-Forward-Netzwerk, in der Regel eine oder zwei Schichten, das in das ursprüngliche Netzwerk injiziert wird.

Ein Adapter ordnet die Darstellung des ausgeblendeten Zustands des vortrainierten Modells der spezialisierten Darstellung zu, die für die neue Aufgabe erforderlich ist.

Der Adapter und das ursprüngliche Modell werden zusammen mit den Daten der nachgelagerten Aufgabe trainiert, sodass der Adapter die neue Zuordnung erlernen kann, während die ursprünglichen Modellgewichtungen weitgehend unverändert bleiben.

Dieser Ansatz bewahrt das Wissen in den ursprünglichen, vortrainierten Gewichten, wodurch erhebliche Ressourcen für das erneute Training eingespart werden.

Mehrere verschiedene Adapter können auch zu demselben Basismodell hinzugefügt werden, um Multitasking-Lernen zu ermöglichen.

Die Adapter ermöglichen eine gezielte aufgabenspezifische Anpassung des Modells, ohne sich gegenseitig zu stören.

Adapter ermöglichen ein schnelles Lernen der Aufgabenübertragung für große, vortrainierte Modelle.

Durch das Hinzufügen von einfachen Adaptern, anstatt das Modell durchgängig neu zu trainieren, bieten sie eine effiziente Möglichkeit, diese Modelle mit begrenzten Rechenressourcen an neue Aufgaben und Datasets anzupassen.

Ein Encoder-Decoder-Modell ist ein spezieller Typ von Architektur in der KI und im maschinellen Lernen, der darauf abzielt, Sequenzen von Daten zu verstehen, zu transformieren und zu generieren.

Der Encoder nimmt die Eingabedaten, wie beispielsweise ein Text in der Ausgangssprache bei einer Übersetzung oder ein digitales Bild von einem Objekt, und wandelt sie in einen festen Satz von Daten um, die als Kontextvektoren oder interne Repräsentationen bekannt sind.

Der Encoder abstrahiert die Hauptmerkmale der Eingabedaten, um die relevanten Informationen in einer verdichteten Form zu erfassen.

Nachdem der Encoder die Eingabedaten verarbeitet hat, nimmt der Decoder diesen kodierten Satz von Informationen und wandelt ihn zurück in die gewünschten Ausgabedaten um, wie beispielsweise einen Text in der Zielsprache oder ein Bild von einem Objekt, und der Decoder lernt, basierend auf den vom Encoder bereitgestellten Informationen, die beste Darstellung der Ausgabedaten zu generieren.

Die Kombination dieser beiden Komponenten ermöglicht es dem Modell, komplexe Aufgaben wie Sprachübersetzung, Inhaltszusammenfassung und sogar die Erzeugung von menschenähnlicher Sprache durchzuführen.

Wissensdestillation oder Modelldestillation ist im Zusammenhang mit Künstlicher Intelligenz (KI) der Vorgang, bei dem Wissen von einem großen vortrainierten Modell durch Nachahmung auf ein kleineres Modell übertragen wird.

Während große Modelle (wie tiefe neuronale Netze oder Kombinationen mehrerer Modelle) eine größere Wissenskapazität haben als kleine Modelle, wird diese Kapazität möglicherweise nicht vollständig genutzt.

Wissensdestillation überträgt Wissen von einem großen Modell, oft Lehrermodell genannt, auf ein kleineres Modell, oft Schülermodell genannt, ohne wesentlich an Aussagekraft einzubüßen.

Da kleinere Modelle mit weniger Parametern weniger aufwändig zu trainieren und zu nutzen sind, können sie auf weniger leistungsfähiger Hardware eingesetzt werden.

Schülermodelle dieser Art liefern rascher Resultate, sogenannte "Inferenzen", als die entsprechend komplexeren Lehrermodelle.

Die Wissensdestillation ist mit anderen Worten eine Technik des maschinellen Lernens, die darauf abzielt, das Gelernte von einem großen vortrainierten Modell, dem "Lehrermodell", auf ein kleineres "Schülermodell" zu übertragen, und wird beim Deep Learning als eine Form der Modellkomprimierung und des Wissenstransfers verwendet, insbesondere bei großen tiefen neuronalen Netzen.

Das Ziel der Wissensdestillation besteht somit darin, ein kompakteres Modell zu trainieren, um ein größeres, komplexeres Modell nachzuahmen.

Während das Ziel beim herkömmlichen Deep Learning darin besteht, ein künstliches neuronales Netzwerk zu trainieren, um seine Vorhersagen näher an die in einem Trainingsdatensatz bereitgestellten Output-Beispiele zu bringen, besteht das Hauptziel bei der Wissensdestillation darin, das Schülernetzwerk so zu trainieren, dass es mit den Vorhersagen des Lehrernetzwerks übereinstimmt.

In einer Weiterbildung der Erfindung ist es vorgesehen, dass das Ergebnis des Bild-Encoders einem Masken-Decoder zugeführt wird, welcher dazu eingerichtet ist, Segmentierungs-Masken für ein Bild zu erzeugen, insbesondere für eine Anomalie-Erkennung in einem verarbeiteten Bild.

Dadurch kann erreicht werden, dass die Effizienz für eine Bild-Verarbeitung an einem Klienten weiter verbessert wird, und die Genauigkeit der Bildanalyse-Aufgabe verbessert wird.

In einer Weiterbildung der Erfindung ist es vorgesehen, dass das Bereitstellen des Bildes mithilfe einer Kamera durchgeführt wird.

Dadurch kann auf einfache und effiziente Weise eine Bildanalyse-Aufgabe an einem Klienten durchgeführt werden.

In einer Weiterbildung der Erfindung ist es vorgesehen, dass für das erkannte Objekt im Bild ferner eine Anomalie-Erkennung mithilfe des lokalen Modells durchgeführt wird.

Dadurch kann auf einfache und effiziente Weise eine Bildanalyse-Aufgabe an einem Klienten durchgeführt werden.

Die erfindungsgemäße Aufgabe wird auch durch ein Klienten-Server-System zum Erkennen eines Objekts in einem Bild gelöst, umfassend einen Server und verbundene Klienten, welche jeweils eine Rechenvorrichtung mit einem Prozessor und einem Speicher aufweisen, und das Klienten-Server-System dazu eingerichtet ist, das erfindungsgemäße Verfahren auszuführen.

In einer Weiterbildung der Erfindung ist es vorgesehen, dass ferner ein bildgebender Sensor umfasst ist, welcher dazu eingerichtet ist, ein hergestelltes oder bearbeitetes Produkt als Objekt mithilfe eines digitalen Bilds zu erfassen und dem Verfahren als Bild bereitzustellen.

Die Rechenvorrichtungen des Servers und der Klienten umfassen jeweils einen Prozessor mit einem Speicher, sowie einem Adapter-Speicher.

Die erfindungsgemäße Aufgabe wird auch durch ein Computer-Programm-Produkt gelöst, umfassend Befehle, die bei der Ausführung des Programms durch das erfindungsgemäße Klienten-Server-System dieses veranlassen, das erfindungsgemäße Verfahren/die Schritte des erfindungsgemäßen Verfahrens auszuführen.

In den nachfolgenden Figuren ist ein Ausführungsbeispiel der Erfindung gezeigt und näher beschireben.
Fig. 1 ein Ausführungsbeispiel der Erfindung in Form eines Ablaufdiagramms,
Fig. 2 ein Ausführungsbeispiel der Erfindung in Form eines Systems.

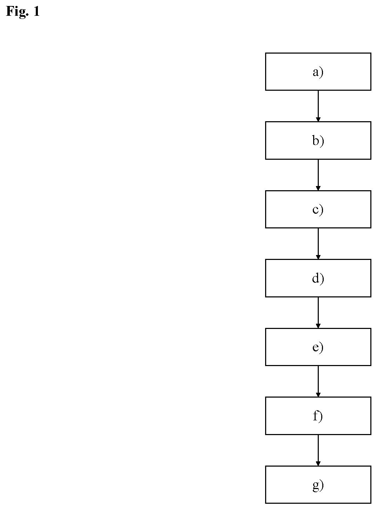

**Fig. 1** stellt ein Ausführungsbeispiel der Erfindung in Form eines Ablaufdiagramms als Verfahren zum Erkennen eines Objekts in einem digitalen Bild durch ein Klienten-Server-System.

Zumindest ein Verfahrens-Schritt ist in einem Computer implementiert.

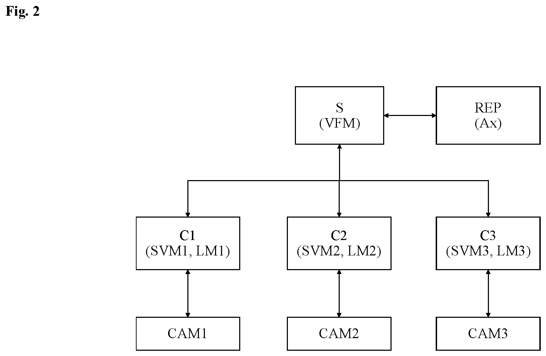

Das System umfasst einen Server und zumindest zwei Klienten gemäß der nachfolgenden Fig. 2.

Folgende Schritte werden ausgeführt:
a) Bereitstellen eines trainierten Grund-Modells VFM auf Basis künstlicher Intelligenz, welches ein Convolutional Neural Network, CNN, mit Lagen umfasst, und dadurch einen Bild-Encoder bildet, an den Server S,
b) Bereitstellen einer Menge von Adaptern Ax für das Grund-Modell VFM, in einem Speicher REP, wobei die Adapter der Menge an Adaptern Ax jeweils dazu eingerichtet sind, das Grund-Modell VFM für eine spezifische Anwendung anzupassen, an den Server S,
c) Anpassen des Grund-Modells VFM durch einen Adapter, welcher durch eine bereitgestellte Anwendungsdeklaration für den jeweiligen Klienten C1-C3 aus der Menge an Adaptern Ax ausgewählt ist, durch den Server S,
d) Erzeugen eines jeweiligen anwendungsspezifischen Modells SVM1-SVM3, für den jeweiligen Klienten, auf Basis des zuvor angepassten Grund-Modells VFM durch Wissensdestillation, durch den Server S,
e) Übermitteln des jeweiligen anwendungsspezifischen Modells SVM1-SVM3 als jeweiliges lokales Modell LM1-LM3 an den jeweiligen Klienten C1-C3,
f) Bereitstellen eines Bildes mit dem Objekt an einen, unter den Klienten C1-C3 ausgewählten Klienten,
g) Erkennen des Objekts im Bild mithilfe des jeweiligen lokalen Modells LM1-LM3 am ausgewählten Klienten.

Das Ergebnis des Bild-Encoders wird optional einem Masken-Decoder zugeführt, welcher dazu eingerichtet ist, Segmentierungs-Masken für bereitgestellte Bilder zu erzeugen, insbesondere für eine Anomalie-Erkennung in einem verarbeiteten Bild.

Das Bereitstellen des Bildes kann beispielsweise mithilfe einer Kamera CAM1-CAM3 durchgeführt werden.

Für das erkannte Objekt kann im Bild ferner eine Anomalie-Erkennung mithilfe des lokalen Modells LM1-LM3 durchgeführt werden.

Ein Klient kann ein sogenannter "Datenbesitzer" (engl. "data catalog owner") sein, also ein System zur visuellen Qualitätsinspektion bei der Herstellung von Produkten.

Ein Klient kann von einem weiteren Klienten im System insofern unabhängig sein, als die Inspektionssysteme verschiedenen Hersteller administrativ zugeordnet werden können.

Jedoch soll die Inspektionsaufgabe zuverlässig gelöst werden und so wenig Daten wie möglich mit anderen Teilnehmern im System, das heißt anderen Klienten geteilt werden.

Die Abbildung kann eine zulässige oder eine unzulässige Repräsentation des Objekts beinhalten, wie beispielsweise mit korrekten oder defekten Produkten oder Anomalien im Produkt oder Produktumfeld.

Das Lernen der Bild-Einbettung von Darstellungen kann beispielsweise erfolgen, indem ein "Convolutional Neural Network", kurz CNN, mit lokal verfügbaren Bilddatensätze trainiert wird.

Dabei ist ein CNN-Modell darauf trainiert, ein oder mehrere aussagekräftige Merkmale aus den Bildern zu extrahieren und relevante Merkmale für Qualitätsprüfungsaufgaben zu erfassen.

Mit den Adaptern sind Adapter auf Basis künstlicher Intelligenz gemeint, kurz Kl-Adapter.

Beim Anpassen des Grund-Modells durch einen Kl-Adapter erfolgt die Auswahl des entsprechenden Kl-Adapters aus der Menge an KI-Adaptern Ax im Speicher REP mithilfe der Anwendungsdeklaration.

Die Anwendungsdeklaration für den jeweiligen Klienten C1-C3 bezieht sich auf eine jeweilige Klienten-Konfiguration, welche beispielsweise eine Bildanalyse-Aufgabe in Kombination mit einer Bild-Erfassung festlegt, und kann durch den jeweiligen Klienten C1-C3 selbst erfolgen, und dementsprechend an den Server S bereitgestellt werden.

**Fig. 2** zeigt ein Ausführungsbeispiel der Erfindung in Form eines Systems.

Das Klienten-Server-System zum Erkennen eines Objekts in einem digitalen Bild umfasst einen Server S und zumindest zwei Klienten C1-C3 mit jeweiligen Rechenvorrichtungen und jeweilig verbundenen Kameras CAM1-CAM3 zur Erfassung von Bildern von hergestellten Produkten.

Der Server S und verbundene Klienten C1-C3 weisen jeweils eine Rechenvorrichtung mit einem Prozessor und einem Speicher auf.

Zusätzlich ist der Server S mit einem Adapter-Speicher REP (engl. "repository") verbunden, in welchem die Menge an Adaptern Ax gespeichert und abrufbar ist.

Der Adapter-Speicher enthält mehrere KI-Adapter Ax, welche jeweils eine anwendungsspezifische Anpassung oder Feineinstellung des VFM erlauben.

Beispielsweise kann eine Optimierung für eine Anomalie-Erkennung, eine Erkennung von Produktdetails in einem Bild, eine Erkennung von Betriebszuständen eines abgebildeten technischen Geräts in einem Bild, oder Ähnliches mithilfe der Adapter, also leichtgewichtige Adaptermodule, durchgeführt werden.

Jeder Adapter ist so konzipiert, dass dieser das VFM für eine bestimmte Aufgabe fein abstimmt, wobei die Komplexität des VFM im Wesentlichen erhalten bleibt.

Durch Anwendung des entsprechenden Adapters ist eine schnelle Anpassung des VFM ohne aufwändiges erneutes Training möglich.

Das Klienten-Server-System ist dazu eingerichtet, das erfindungsgemäße Verfahren nach Fig. 1 auszuführen.

Der bildgebende Kamera-Sensor CAM1 ist dazu eingerichtet, beispielsweise ein durch eine Produktionsanlage hergestelltes Produkt, oder ein durch eine Bearbeitungsanlage bearbeitetes Produkt als Objekt mithilfe eines digitalen Bilds zu erfassen.

Es ist klar, dass der jeweilige Klient C1-C3 eine entsprechende Steuervorrichtung zum Ansteuern der jeweiligen Kamera CAM1-CAM3 umfasst, oder die Kamera CAM1-CAM3 beispielsweise durch eine entsprechende Schnittstelle, wie USB, ansteuerbar ist.

Entsprechende Sensordaten des Sensors CAM1 werden vom Klienten C1 als Bilddaten im Verfahren weiterverarbeitet.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- Ax: Menge an Anwendungs-Adaptern
- C1-C3: Klient
- CAM1-CAM3: Kamera-Sensor
- LM1-LM3: lokales Modell am Klienten
- S: Server
- SVM1-SVM3: anwendungsspezifischen Modell, "small vision model"
- VFM: Grund-Modell, "visual foundation model"

## Patentansprüche

1. Computer-implementiertes Verfahren zum Erkennen eines Objekts in einem Bild, welches durch ein Klienten-Server-System mit einem Server (S) und verbundenen Klienten (C1-C3) ausgeführt wird, wobei folgende Schritte ausgeführt werden:
a) Bereitstellen eines trainierten Grund-Modells (VFM) auf Basis künstlicher Intelligenz, welches ein Convolutional Neural Network, CNN, mit Lagen umfasst, und dadurch einen Bild-Encoder bildet, an den Server (S),
b) Bereitstellen einer Menge von Adaptern (Ax) für das Grund-Modell (VFM), in einem Speicher (REP), wobei die Adapter der Menge an Adaptern (Ax) jeweils dazu eingerichtet sind, das Grund-Modell (VFM) für eine spezifische Anwendung anzupassen, an den Server (S),
c) Anpassen des Grund-Modells (VFM) durch einen Adapter, welcher durch eine bereitgestellte Anwendungsdeklaration für den jeweiligen Klienten (C1-C3) aus der Menge an Adaptern (Ax) ausgewählt ist, durch den Server (S),
d) Erzeugen eines jeweiligen anwendungsspezifischen Modells (SVM1-SVM3), für den jeweiligen Klienten, auf Basis des zuvor angepassten Grund-Modells (VFM) durch Wissensdestillation, durch den Server (S),
e) Übermitteln des jeweiligen anwendungsspezifischen Modells (SVM1-SVM3) als jeweiliges lokales Modell (LM1-LM3) an den jeweiligen Klienten (C1-C3),
f) Bereitstellen eines Bildes mit dem Objekt an einen, unter den Klienten (C1-C3) ausgewählten Klienten,
g) Erkennen des Objekts im Bild mithilfe des jeweiligen lokalen Modells (LM1-LM3) am ausgewählten Klienten.

2. Verfahren nach dem vorhergehenden Anspruch, wobei das Ergebnis des Bild-Encoders einem Masken-Decoder zugeführt wird, welcher dazu eingerichtet ist, Segmentierungs-Masken für ein Bild zu erzeugen, insbesondere für eine Anomalie-Erkennung in einem verarbeiteten Bild.

3. Verfahren nach einem der vorhergehenden Ansprüche, wobei Bereitstellen des Bildes mithilfe einer Kamera (CAM1-CAM3) durchgeführt wird.

4. Verfahren nach einem der vorhergehenden Ansprüche, wobei für das erkannte Objekt im Bild ferner eine Anomalie-Erkennung mithilfe des lokalen Modells (LM1-LM3) durchgeführt wird.

5. Klienten-Server-System zum Erkennen eines Objekts in einem Bild, umfassend einen Server (S) und verbundene Klienten (C1-C3), welche jeweils eine Rechenvorrichtung mit einem Prozessor und einem Speicher aufweisen, und das Klienten-Server-System dazu eingerichtet ist, das Verfahren nach einem der vorhergehenden Ansprüche auszuführen.

6. Klienten-Server-System nach dem vorhergehenden Anspruch, welches ferner einen bildgebenden Sensor (CAM1-CAM3) umfasst, welcher dazu eingerichtet ist, ein hergestelltes Produkt als Objekt mithilfe eines digitalen Bilds zu erfassen und dem Verfahren als weiteres Bild bereitzustellen.

7. Computer-Programm-Produkt, umfassend Befehle, die bei der Ausführung des Programms durch das System nach einem der vorhergehenden System-Ansprüche dieses veranlassen, das Verfahren/die Schritte des Verfahrens nach einem der vorhergehenden Verfahrens-Ansprüche auszuführen.
